## Europäisches Patentamt

## European Patent Office

## Office européen des brevets

(11) Veröffentlichungsnummer: **0 199 365**
**A2**

(12) 

# EUROPÄISCHE PATENTANMELDUNG

(21) Anmeldenummer: 86105744.6

(22) Anmeldetag: 25.04.86

(51) Int. Cl.⁴: **G 01 N 21/37**

(30) Priorität: 26.04.85 DE 3515128

(43) Veröffentlichungstag der Anmeldung:
29.10.86 Patentblatt 86/44

(84) Benannte Vertragsstaaten:
DE FR GB IT NL

(71) Anmelder: **Hartmann & Braun Aktiengesellschaft**
**Gräfstrasse 97**
**D-6000 Frankfurt am Main 90(DE)**

(72) Erfinder: **Fabinski, Walter**
**An der Landwehr 70**
**D-6239 Kriftel(DE)**

(72) Erfinder: **Schaefer, Werner, Dr.**
**Albert-Schweitzer-Strasse 12**
**D-6242 Kronberg 2(DE)**

(54) Infrarot-Gasanalysator.

(57) Bei einem Infrarot-Gasanalysator werden zwei die Meßküvette und die Vergleichsküvette verlassenden Strahlenbündel von zwei Empfängerkammern aufgenommen, zwischen denen als Indikator für die Differenz der Drücke in beiden Empfängerkammern eine piezoelektrisch wirkende Folie aus Polyvinylidenfluorid angeordnet ist, die so gespannt ist, daß sie die Druckschwankungen voll aufnimmt.

Hartmann & Braun              6000 Frankfurt/M., 23.04.1986
Aktiengesellschaft           Gräfstraße 97        Tu/Na

"Infrarot-Gasanalysator"

Bei einem Infrarot-Gasanalysator dient die spezifische Strahlungsabsorption mehratomiger nichtelementarer Gase im infraroten Spektralbereich als Meßeffekt. Die Absorption wird in einer Wechselschicht-Fotometeranordnung mit zwei parallelen Strahlengängen und einem selektiv wirkenden gasgefüllten Strahlungsempfänger gemessen.

Das Meßgas wird durch die im Meßstrahlengang liegende Analysenkammer geleitet. In der Vergleichskammer im zweiten Strahlengang befindet sich ein Gas, das keine infrarote Strahlen absorbiert.

Abhängig von der Konzentration der Meßkomponente in der Analysenkammer gegenüber dem konstanten Wert in der Vergleichskammer stellt sich eine Differenz der Strahlung am Ausgang der Kammern ein.

Diese Strahlungsdifferenz bewirkt eine unterschiedliche Erwärmung und damit unterschiedliche Drücke in den beiden zugeordneten Empfängerkammern. Diese Druckdifferenz wird von einem Membrankondensator erfaßt und in ein elektrisches Signal umgewandelt.

Solche Infrarot-Gasanalysatoren sind z.B. in dem Listenblatt 20-1.12 der Anmelderin vom Mai 1983 Seite 1 beschrieben.

Die Erfindung bezieht sich auf einen derartigen mit Meß- und Vergleichskammer ausgerüsteten Infrarot-Gasanalysator und besteht darin, daß zur Umwandlung der Druckdifferenz zwischen den Empfängerkammern in ein elektrisches Signal zwischen den Empfängerkammern eine piezoelektrisch wirkende Folie aus Polyvinylidenfluorid vorgesehen ist, die so gespannt ist, daß sie die Druckschwankungen voll aufnimmt.

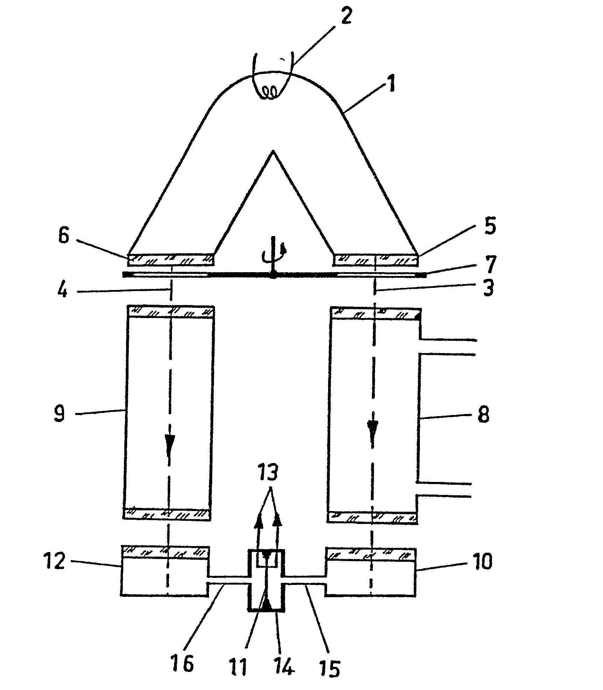

Ein Ausführungsbeispiel gemäß der Erfindung wird anhand der Zeichnung näher erläutert.

Eine Strahlenleitvorrichtung 1 wandelt die Infrarotstrahlen einer Lichtquelle 2 in zwei parallele Strahlenbündel 3 und 4 um. Das Strahlenbündel 3 tritt durch das Fenster 5 aus der Strahlenleitvorrichtung 1 in die Meßküvette 8, die von dem die Meßkomponente enthaltenden Gas durchströmt wird. Die die Meßküvette verlassenden Infrarotstrahlen werden von der Empfängerkammer 10 aufgenommen.

Das Strahlenbündel 4 verläßt die Strahlenleitvorrichtung 1 durch das Fenster 6 und durchläuft die Vergleichsküvette 9, in der sich ein Infrarotstrahlen·nicht absorbierendes Gas, z.B. Stickstoff, befindet. Die Infrarotstrahlen, die die Vergleichsküvette 9 durchlaufen, werden von der Empfängerkammer 12 aufgenommen.

Von den Küvetten 8 und 9 ist ein rotierendes Blendenrad 7 angeordnet, das die Strahlenbündel 3 und 4 gleichphasig unterbricht.

**0199365**

Die Empfängerkammern 10 und 12 arbeiten selektiv; sie enthalten das Gas, das zu analysieren ist oder ein Gas gleicher Absorptionslinien.

Durch Absorption in der Empfängerkammer 10 entstehen Änderungen des Druckes, die sich der Höhe nach von den Druckänderungen in der Empfängerkammer 8, die von der Konzentration der Meßkomponente abhängig sind, unterscheiden. Zur Erfassung dieser Druckschwankungen ist zwischen den Empfängerkammern 8 und 10 eine Folie 11 aus Polyvinylidenfluorid angeordnet, die an den Klemmen 13 nach außen ein elektrisches Signal als Abbild dieser Schwankungen abgibt. Die Folie 11 ist in dem Gehäuse 14 untergebracht, das über die Rohrleitung 15 mit der Empfängerkammer 10 und über die Rohrleitung 16 mit der Empfängerkammer 12 verbunden ist.

Die Folie 11 aus Polyvinylidenfluorid wirkt piezoelektrisch und ist so gespannt, daß sie die Druckschwankungen zwischen den Empfängerkammern 8 und 10 voll aufnimmt. Zum Ausgleich des statischen Druckes kann in der Folie 11 ein Loch vorgegebener Größe vorgestanzt sein.

Patentanspruch

Infrarot-Gasanalysator mit einer Meßküvette und einer Vergleichsküvette und zwei hinter der Meßküvette und der Vergleichsküvette angeordneten Empfängerkammern, in denen nach Maßgabe der Konzentration der Meßkomponente Druckdifferenzen entstehen, dadurch gekennzeichnet, daß zur Umwandlung der Druckdifferenz zwischen den Empfängerkammern (10 und 12) in elektrische Signale zwischen den Empfängerkammern (10 und 12) eine piezoelektrisch wirkende Folie (11) aus Polyvinylidenfluorid vorgesehen ist, die so gespannt ist, daß sie die Druckschwankungen voll aufnimmt.